# EUROPEAN PATENT APPLICATION

(11) **EP 2 469 831 A1**
(43) Date of publication of application: **27.06.2012**
(21) Application number: 11178287.6
(22) Date of filing: 22.08.2011
(51) Int. Cl.: H04N 1/04

(54) **Image scanning apparatus and circuit board in image scanning apparatus**

(30) Priority: 21.12.2010 KR 20100131737
(71) Applicant: Samsung Electronics Co., Ltd., Suwon-si, Gyeonggi-do (KR)
(72) Inventor: Son, Kyung-hyun, Seoul (KR); Hyun, Ho-ill, Gyeonggi-do (KR)
(74) Representative: Bruce, Alexander Richard Henry

(57) **Abstract**

An image scanning apparatus includes an illuminator to radiate light on an original image; an image sensor to scan image information of the original image from the light reflected from the original image, an image processor to perform image processing with respect to a signal scanned by the image sensor, and a memory to store data which is to be image-processed. The image sensor, the image processor, and the memory may also be disposed on one circuit board in the image scanning apparatus.

## Description

The present invention relates to an image scanning apparatus and a circuit board in the image scanning apparatus, and more particularly, to an image scanning apparatus which disposes and uses an image sensor, a control circuit, and a memory on a circuit board, and the circuit board in the image scanning apparatus.

An image scanning apparatus is an apparatus which scans an original image, such as a document, a picture, a film, or the like, and converts the original image into digital data. In this case, the digital data is displayed on a monitor of a computer or is printed by a printer to be generated as an output image. Examples of the image scanning apparatus include a scanner, a copier, a fax machine, a multifunction peripheral (MFP) which complexly realizes such functions through one device, etc.

In more detail, the image scanning apparatus scans the original image using a device, such as a contact image sensor (CIS) or a charge-coupled device (CCD), and operates data to form the same image equal to the original image, using a scanned signal.

However, conventional image scanning apparatuses transmit a clock signal, which is scanned by an image sensor, to a control circuit through a wire or a flexible flat cable (FFC). If the image scanning apparatus uses the wire or the FFC, impedance changes according to a physical distance. Also, the wire or the FFC operates as an antenna and thus generates radiated noise such as electromagnetic interference (EMI) or the like.

The present invention provides an image scanning apparatus which disposes and uses an image sensor, a control circuit, and a memory on a circuit board, and the circuit board in the image scanning apparatus.

Additional exemplary embodiments of the present invention will be set forth in part in the description which follows and, in part, will be obvious from the description, or may be learned by practice of the invention.

The foregoing and/or other features and utilities of the present invention may be achieved by an image scanning apparatus, including an illuminator to radiate light on an original image, an image sensor to scan image information of the original image from the light reflected from the original image, an image processor to perform image processing with respect to a signal scanned by the image sensor, and a memory to store data which is to be image-processed, wherein the image sensor, the image processor, and the memory are disposed on one circuit board.

The image sensor, the image processor, and the memory may be disposed on an upper surface of the circuit board.

The image sensor may be disposed on an upper surface of the circuit board, and the image processor and the memory may be disposed on a lower surface of the circuit board.

The image sensor may be at least one of a complementary metal-oxide semiconductor (CMOS) image sensor (CIS) and a charge-coupled device (CCD).

The image scanning apparatus may further include an analog front-end (AFE) circuit to convert the signal scanned by the image sensor into a digital signal and provide the digital signal to the image processor.

The image scanning apparatus may further include a communication interface unit to digitally output data processed by the image processor.

The image scanning apparatus may further include a light-emitting diode (LED) drive integrated circuit (IC) to control power supplied to the illuminator and to be disposed on the circuit board.

The image scanning apparatus may further include a motor to pass the original image through the image sensor, and a motor drive IC to control power supplied to the motor, wherein the motor drive IC is disposed on the circuit board.

The foregoing and/or other features and utilities of the present invention may also be achieved by a circuit board in an image scanning apparatus, including a sensor circuit to scan image information of an original image, an image processor circuit to perform image processing with respect to a signal scanned by the sensor circuit, and a memory circuit to store data which is to be image-processed, wherein parts constituting the image processor circuit and the memory circuit are fixed on a surface of the circuit board.

A part constituting the sensor circuit and a part constituting the image processor circuit and the memory circuit may be disposed on different surfaces of the circuit board.

The sensor circuit may include at least one of a CIS and a CCD.

The memory circuit may include a flash memory and a dynamic random access memory (DRAM).

The circuit board may further include an AFE circuit to convert the signal scanned by the sensor circuit and provide the digital signal to the image processor circuit.

Parts constituting the sensor circuit and the AFE circuit may be disposed on a surface of the circuit board.

The circuit board may further include a communication circuit to digitally output data processed by the image processor circuit.

The circuit board may further include an LED drive IC to control power supplied to an illuminator, and a motor drive IC to control power supplied to a motor, wherein parts constituting the LED drive IC, the motor drive IC, the image processor circuit, and the memory circuit are fixed on a surface of the circuit board.

In another feature, a circuit board included with a scanner of an image forming apparatus that receives an original image comprises a first surface having an electrically conductive signal trace formed thereon, an image processor disposed on the first surface and having an output connected to the signal trace to output a clock signal thereto, and an image sensor having an input connected to the signal trace to receive the clock signal and to scan image information of the original image based on the clock signal.

These and/or other exemplary embodiments of the present invention will become apparent and more readily appreciated from the following description of the exemplary embodiments, taken in conjunction with the accompanying drawings of which:
FIG. 1 is a block diagram illustrating a structure of an image scanning apparatus according to an exemplary embodiment;
FIG. 2A is a perspective view of a scanner according to an exemplary embodiment of the present general concept;
FIG. 2B is block diagram of the scanner of FIG. 2A according to an exemplary embodiment;
FIG. 3 is a schematic view illustrating a circuit board in an image scanning apparatus according to an exemplary embodiment;
FIG. 4A is a schematic view illustrating an upper surface of a circuit board in an image scanning apparatus, according to another exemplary embodiment;
FIG.4B is a schematic view illustrating a lower surface of the circuit board in the image scanning apparatus, according to the another exemplary embodiment;
FIG. 4C is a schematic view illustrating an upper surface of a circuit board in an image scanning apparatus, according to another exemplary embodiment;
FIG. 4D is a schematic view illustrating a lower surface of the circuit board in the image scanning apparatus, according to the another exemplary embodiment;
FIGS. 5A and 5B are graphs illustrating clock signals transmitted according to flexible flat cable (FFC) shield conditions; and
FIGS. 6A and 6B are graphs illustrating hold times of a threshold level according to FFC shield conditions.

Reference will now be made in detail to the embodiments of the present invention, examples of which are illustrated in the accompanying drawings, wherein like reference numerals refer to like elements throughout. The embodiments are described below in order to explain the present invention by referring to the figures.

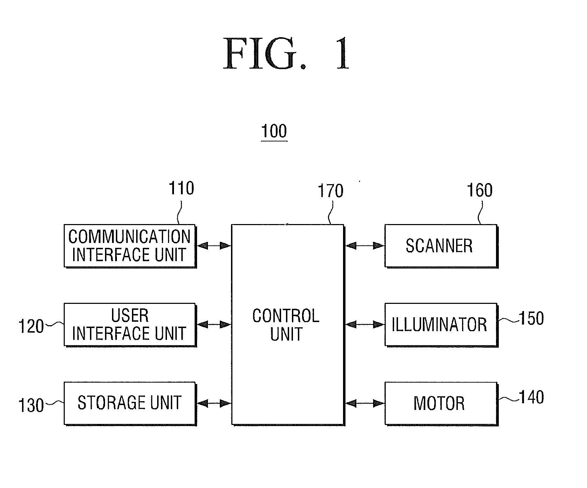

FIG. 1 is a block diagram illustrating a structure of an image scanning apparatus 100 according to an exemplary embodiment. Here, the image scanning apparatus 100 may be a scanner, a copier, a fax machine, a multifunction peripheral (MFP) which complexly realizes functions of them through a device, and/or a 3 dimension (3D) scanner.

Referring to FIG. 1, the image scanning apparatus 100 includes, but is not limited to, a communication interface unit 110, a user interface unit 120, a storage unit 130, a motor 140, an illuminator 150, a scanner 160, and a controller 170.

The communication interface unit 110 may be used to connect the image scanning apparatus 100 to an external device. For example, the image scanning apparatus 100 may be connected to a terminal device (not shown), such as a personal computer (PC), a notebook PC, a personal digital assistant (PDA), a digital camera, or the like, and transmits an image scanned by the image scanning apparatus 100 to the terminal device. Also, the communication interface unit 110 may be connected to the terminal device through a local area network (LAN), an internet network, and/or a universal serial bus (USB) port.

The user interface unit 120 receives a scan command. The scan command may be initiated, for example, by a user. The user interface unit 120 includes a plurality of function keys (not shown) through which the user can set and/or select various kinds of functions supported by the image scanning apparatus 100. The user interface unit 120 may also include a display (not shown) to display various types of information provided from the image scanning apparatus 100. The user interface unit 120 may be realized as a control panel which simultaneously realizes an input and an output like a touch pad or the like, and/or may be realized as a device into which a mouse and a monitor are integrated. The scan command may be received through the user interface unit 120 and/or may be received from the terminal device through the communication interface unit 110.

The storage unit 130 stores a scanned image. More specifically, the storage unit 130 stores an image scanned by the scanner 160, which is described in greater detail below. The storage unit 130 may be realized as an internal storage medium of the image scanning apparatus 100 and/or an external storage medium. The external storage medium may include, but is not limited to, a removable disk including a USB memory, a storage medium connected to a host, a web server connected through a network, or the like. In at least one exemplary embodiment, the storage unit 130 is described as an element installed outside the scanner 160; however, it is appreciated that the storage unit 130 may be an element installed inside the scanner 160.

The motor 140 allows an original image to pass the scanner 160. In more detail, if the scan command is input from the user through the user interface unit 120 and/or the communication interface unit 110, the motor 140 moves the original image or the scanner 160 to pass the original image through the scanner 160.

The illuminator 150 radiates light onto the original image. More specifically, the illuminator 150 radiates an amount of light preset according to an operation pulse, i.e., drive signal, of a light-emitting diode (LED) drive integrated circuit (IC) 260, which will be described later. Here, the illuminator 150 is turned on/off using a pulse width modulation (PWM) method to radiate a necessary amount of light onto the original image. The illuminator 150 may be realized as a light source such as a light-emitting diode (LED), an active matrix organic light-emitting diode (AMOLED), or the like. An LED is used as a light source in the present exemplary embodiment, but a cold cathode fluorescent lamp (CCFL) may be used as a light source.

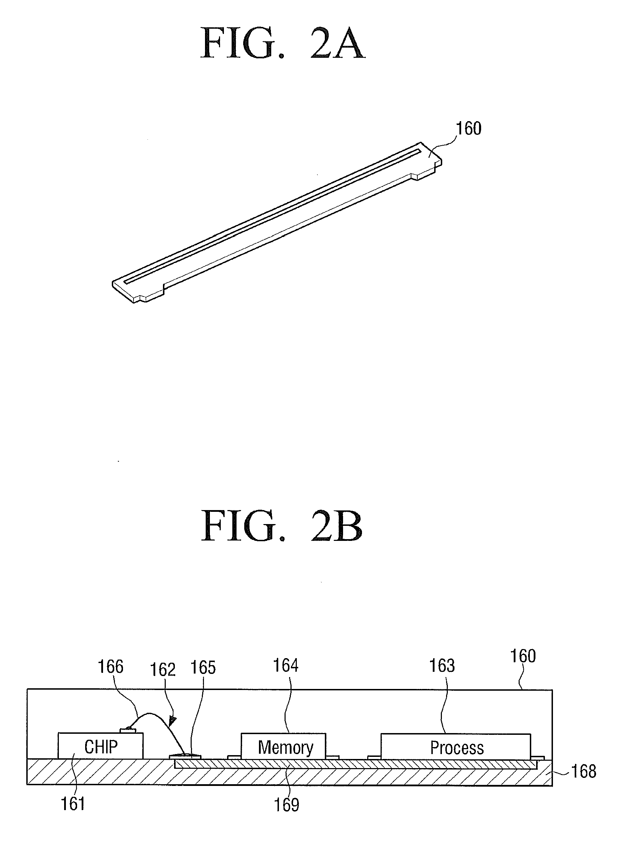

The scanner 160 scans the original image. In more detail, the scanner 160 includes an internal image sensor 161, a sensor contact unit 162, and a lens unit (not shown) which receives light reflected from the original image and focuses the light on the internal image sensor 161. The scanner 160 also scans image information of the original image from the light focused on the internal image sensor. Detailed structure and operation of the scanner 160 will be described later with reference to FIGS. 2 through 4.

The controller 170 controls elements of the image scanning apparatus 100. In more detail, if the scan command (or a copy command) is input through the communication interface unit 110 or the user interface unit 120, the controller 170 controls the motor 140 to pass the original image through the scanner 160. The controller 170 also controls the illuminator 150 and the scanner 160 to radiate light onto the original image when the original image passes the scanner 160 and scan the radiated light.

In FIG. 1, the motor 140 and the illuminator 150 are described as elements which are installed separately from the scanner 160. However, it is appreciated that the motor 140 and the illuminator may be included in the scanner 160.

Detailed structure and function of the scanner 160 will now be described with reference to FIGS. 2A and 2B.

FIGS. 2A and 2B are views illustrating the scanner 160 of FIG. 1. In more detail, FIG. 2A is a perspective view illustrating an outer appearance of the scanner 160, and FIG. 2B is a block diagram illustrating a side of the scanner 160 of FIG. 2A.

Referring to FIG. 2B, the scanner 160 includes an image sensor 161, a sensor contact unit 162, an image processor 163, and a memory 164. However, besides the image sensor 161, the image processor 163, and the memory 164, the scanner 160 may further include other elements.

The image sensor 161 is disposed on a circuit board 168 and scans image information of an original image from light reflected from the original image. The image sensor 161 may be realized as a complementary metal-oxide semiconductor (CMOS) image sensor (CIS) or a charge-coupled device (CCD). The sensor contact unit 162 includes an electrically conductive contact 165 disposed on the board 168 and an electrically conductive element, such as a wire 166, having one end connected to the image sensor 161 and an opposite end connected to the contact 165. The contact 165 is in electrical communication with the memory 164 and the image processor 163 to communicate data therebetween, as discussed in greater detail below.

The image processor 163 performs image processing with respect to a scanned signal. In more detail, the image processor 163 is disposed on the circuit board 168 and forms a scanned image using a signal received through the image sensor 161.

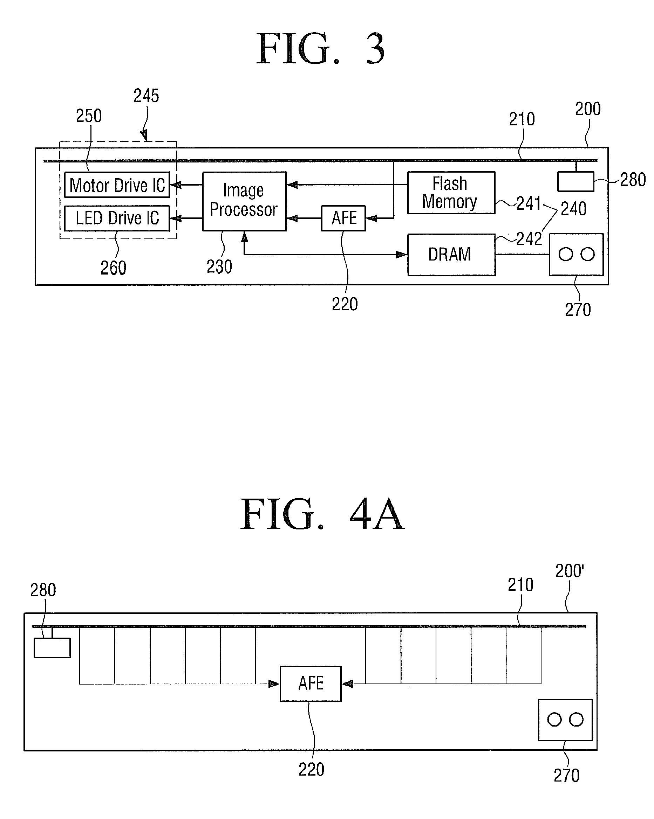

The image processor 163 is also in electrical communication with the contact 165 to control an operation of the image sensor 161. In more detail, the image processor 163 controls the image sensor 161 to perform a scanning operation if the original image is detected by the image sensor, e.g., if the original image is positioned on the image sensor 161. The image processor 163 also controls the monitor 140 and the illuminator 150. The operation of the image processor 160 to control the motor 140 and the illuminator 150 will be described later with reference to FIG. 3.

The memory 164 is also in electrical communication with the contact 165, and stores data which is to be image-processed. In more detail, the memory 164 may include a first memory unit which stores a program necessary to process an image performed by the image processor 163 and a second memory unit which stores a signal scanned by the image sensor 161 and/or data processed by the image processor 163. The first memory unit of the memory 164 may include flash memory and the second memory unit of the memory 164 may include, but is not limited to, dynamic random access memory (DRAM), non-volatile memory and solid-state drive (SSD) memory.

The image sensor 161, the image processor 163, the memory 164, and the contact 165 as described above may be disposed on one circuit board 168 as shown in FIG. 2B.

As described above, the image scanning apparatus 100 according to the present exemplary embodiment realizes the image sensor 161, the image processor 163, the memory 164, and the contact 165 on the circuit board 168 such that each may be in electrical communication with one another via, for example, an electrically conductive signal trace 169 formed on the circuit board 168. The signal trace 169 may be formed using, for example, an etching process, such that the entire signal trace 169 is formed with the circuit board 168. Therefore, an element, such as a wire or a flexible flat cable (FFC), to connect the image sensor 161 and the image processor 163 to each other may be replaced. Since the element such as the wire or the FFC is removed, a clock signal, a signal related to image scanning, or the like may be stably communicated even if an image is scanned at a high speed. Also, radiated noise such as electromagnetic interference (EMI) or the like generated from the wire or the FFC may be removed.

A detailed structure of a circuit board 200 in the image scanning apparatus 100 according to the present exemplary embodiment will now be described with reference to FIG. 3.

FIG. 3 is a view illustrating the circuit board 200 in an image scanning apparatus according to an exemplary embodiment.

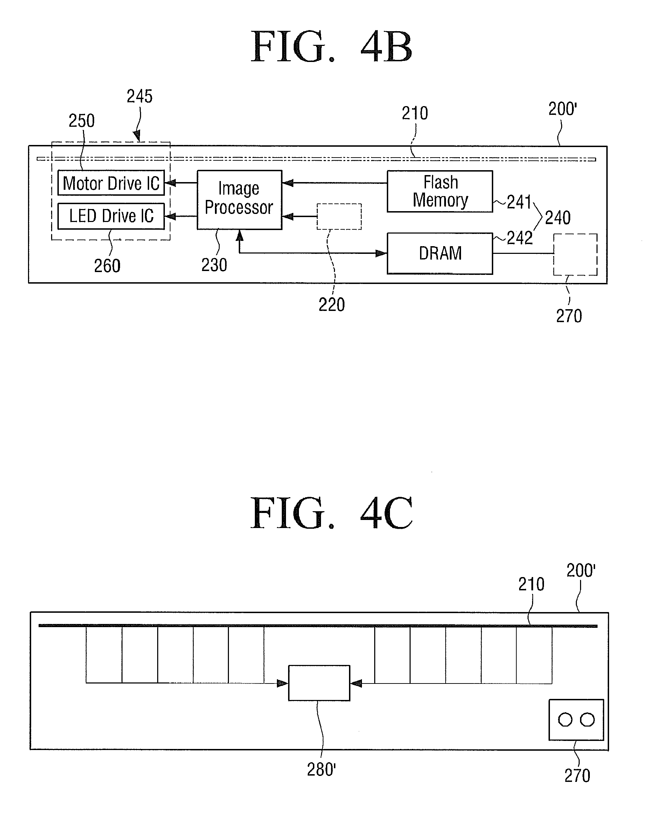

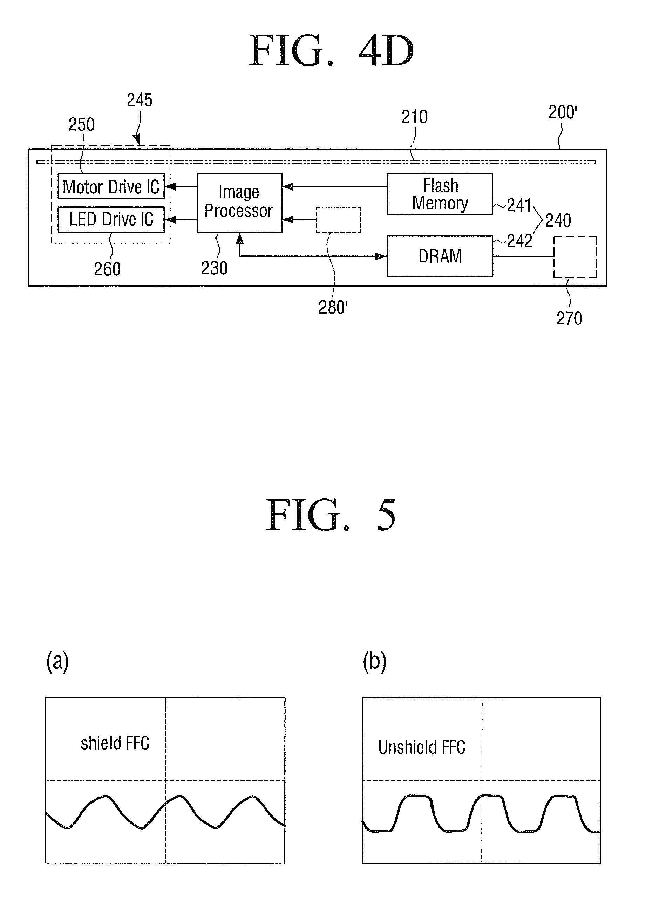

The circuit board 200 is a printed circuit board (PCB) on which parts constituting the image sensor 161, the image processor 163, and the memory 163 are installed. Here, the circuit board 200 may be a single-sided PCB which includes a conductive layer on only one side thereof as shown in FIG. 3. An exemplary embodiment to realize the circuit board 200 as a single-sided PCB will now be described, and an exemplary embodiment to realize the circuit board 200 as a double-sided PCB will be described later with reference to FIG. 4.

Referring to FIG. 3, the circuit board 200 includes a sensor circuit 210, an analog front-end (AFE) circuit 220, an image processor circuit 230, a memory circuit 240, a driver module 245 including a motor drive integrated circuit (IC) 250 and a light-emitting diode (LED) drive IC 260, and a communication circuit 270.

The sensor circuit 210 scans image information of an original image. In more detail, the sensor circuit 210 performs a function of the sensor 161 of FIG. 2B and includes a sensing element 280, such as a CMOS CIS or a CCD. The sensing element 280 i.e., the CMOS CIS or the CCD of the sensor circuit 210, is disposed on an upper surface of the circuit board 200.

The AFE circuit 220 converts a signal scanned by the sensor circuit 210 into a digital signal. In more detail, the sensing element 280, i.e., the CCD or the digital CMOS CIS, converts a scanned signal into a digital signal and outputs the digital signal. It is appreciated that if the sensing element 280 is a CCD, the CCD converts a scanned signal into an analog signal and outputs the analog signal. Alternatively, if the sensing element 280 is a CMOS CIS, the CMOS CIS converts a scanned signal into a digital signal using the AFE circuit 220 and transmits the digital signal to the image processor circuit 230.

The image processor circuit 230 performs image processing with respect to the scanned signal. In more detail, the image processor circuit 230 performs a function of the image processor 163 of FIG. 2B.

The image processor circuit 230 also controls the driver circuit 245 to generate drive signals that control the motor 140 and the illuminator 150, respectively. In more detail, the image processor circuit 230 outputs a control signal to the motor drive IC 250. Based on the control signal, the motor drive IC 250 generates a motor drive signal that adjusts power supplied to the motor 140. Accordingly, a movement speed, a position, etc. of the original image detected by the sensor circuit 210 may be controlled.

Similarly, the image processor circuit 230 outputs a control signal to control the illuminator 150. Based on the control signal, the LED drive IC 260 generates a illuminator drive signal that adjusts power supplied to the illuminator 150.

Accordingly, an amount of light radiated onto the original image may be controlled.

The memory circuit 240 stores data which is to be image-processed. In more detail, the memory circuit 240 includes a first memory 241 unit and a second memory unit 242. In at least one exemplary embodiment illustrated in FIG. 4B, the first memory unit is a flash memory 241 and the second memory unit is a DRAM 242. The flash memory 241 stores a one or more programs necessary to process an image performed by the image processor circuit 230, and the DRAM 242 stores a signal scanned by the image sensor circuit 210 and/or data processed by the image processor circuit 230.

The motor drive IC 250 controls power supplied to the motor 140. In more detail, the motor drive IC 250 controls power supplied to the motor 140 under control of the image processor circuit 230 to control the movement speed, the position, etc. of the original image on the image sensor circuit 210.

The LED drive IC 260 controls power supplied to the illuminator 150. In more detail, the LED drive IC 260 controls a light amount of the illuminator 150 using a pulse width modulation (PWM) method under control of the image processor circuit 230.

The communication circuit 270 digitally outputs the data processed by the image processor circuit 230. In more detail, the communication circuit 270 may include, but is not limited to, a connector which connects the image processor circuit 230 to the controller 170 installed outside, or to an external device, such as a USB connector.

As shown in FIG. 3, the circuit board 200 in the image scanning apparatus according to at least one exemplary embodiment fixes parts constituting the image sensor circuit 210, the image processor 230, and the memory circuit 240 on an upper surface thereof. The circuit board 200 connects the parts to one another using a PCB pattern to stably provide a clock signal and a signal related to image scanning to each of the parts. For example, the image processor circuit and the memory circuit may be fixed on a surface of the circuit board. In another example, the LED drive IC, the motor drive IC, the image processor circuit, and the memory circuit may be fixed on a surface of the circuit board. Accordingly, if the circuit board 200 is realized as a single-sided board, manufacturing cost of the image scanning apparatus is further reduced.

FIGS. 4A and 4B are views illustrating a circuit board 200' in an image scanning apparatus according to another exemplary embodiment. In more detail, FIGS. 4A and 4B relate to an exemplary embodiment in which parts constituting the image sensor 161, the image processor 163, and the memory 164 as described above with reference to FIGS. 2A and 2B are disposed on a double-sided PCB.

Referring to FIGS. 4A and 4B, the circuit board 200' includes a sensor circuit 210, an AFE circuit 220, an image processor circuit 230, a memory circuit 240, a driver module 245 including a motor drive IC 250 and an LED drive IC 260, a communication circuit 270 and a CCD 280.

In more detail, the sensor circuit 210, the AFE circuit 220, the communication circuit 270 and the CCD 280 are disposed on an upper surface of the circuit board 200', and the image processor circuit 230, the memory circuit 240, and the driver module 245 including the motor drive IC 250 and the LED drive circuit 260 are disposed on a lower surface of the circuit board 200'. The AFE is in electrical communication with the sensor circuit 210, which is disposed on the upper surface of the circuit board 200', and the image processor 230, which is disposed on the lower surface of the circuit board 200'. The AFE circuit 220 receives analog scanning signals scanned by the sensing circuit 210, and converts the analog scanning signals into digital scanning signals. The digital scanning signals are then output from the AFE 220 to the image processor 230. Accordingly, the image processor 230 may generate controls signals to control the memory circuit 240, and the driver module 245 including the motor drive IC 250 and the LED drive circuit 260, based on the scanning signals generated by the sensor circuit 210 disposed on the upper surface.

Moreover, the lower surface includes an electrically conductive signal 169 trace formed thereon, as mentioned above. The image processor 230 includes an output connected to the signal trace to output a clock signal thereto. The memory circuit 240 is in electrical communication with the signal trace to store image data to be image-processed. In addition, the driver module includes an input connected to the signal trace to receive the control signal from the image processor. Accordingly, a clock signal, a signal related to image scanning, or the like may be stably used communicated even if an image is scanned at a high speed. Also, radiated noise such as electromagnetic interference (EMI) or the like generated from the wire or the FFC may be removed.

As shown in FIGS. 4A and 4B, the circuit board 200' may form circuits on the lower surface thereof except for the sensor circuit 210 occupying a relatively wide area of the upper surface. Therefore, a size of the circuit board 200' is reduced more than that of the circuit board 200 of FIG. 3.

In at least one exemplary embodiment, the sensor circuit 210, the AFE circuit 220, the communication circuit 270 and the CCD 280 are disposed on the upper surface of the circuit board 200' in FIGS. 4A and 4B. However, the other elements except for the sensor circuit 210 may be disposed on the lower surface of the circuit board 200' or all circuit elements may be disposed on the upper surface of the circuit board 200' as shown in FIG. 3.

As described with reference to FIGS. 2 through 4, the elements corresponding to the scanner 160 are realized on one circuit board. However, elements as shown in FIG. 1 may be disposed together on one circuit board.

Referring to FIGS. 4C and 4D, the CCD 280 illustrated in FIGS. 4A-4B is replaced with a CMOS CIS 280', which outputs digital scanning signals instead of analog scanning signals, as mentioned above. Further, since the CMOS CIS 280' directly outputs digital scanning signals, the AFE 220 is removed, and the CMOS CIS 280' is in electrical communication with the image processor 230 that is disposed on the lower surface of the circuit board 200'. Accordingly, the image processor 230 receives the digital scanning signals directly from the CMOS CIS 280', and controls the memory circuit 240, the motor drive IC 250, and the LED drive circuit 260 as described above.

FIGS. 5A and 5B are views illustrating waveforms of clock signals transmitted according to FFC shield conditions. In more detail, FIG. 5A is a view illustrating a waveform of a clock signal which is measured by an image sensor 161 and transmitted to a shielded FFC cable, and FIG.5B is a view illustrating a waveform of a clock signal which is measured by the image sensor 161 and transmitted to an unshielded FFC cable.

If the unshielded FFC is used, a clock signal which is slightly distorted, as shown in FIG. 5B, is transmitted to the image sensor. However, the unshielded FFC cable operates as an antenna and thus generates an electromagnetic interference (EMI) radiated noise.

Referring to FIG. 5A, if the shielded FFC is used to reduce EMI radiated noise, a clock signal having a greater distorted signal than the unshielded clock signal of FIG. 5B is generated, and then transmitted to the image sensor. Accordingly, using either a shielded FCC cable, or an unshielded FCC cable provides undesirable results, i.e., EMI radiated noise in the case of the unshielded FCC cable, or an unreliable distorted signal in the case of the shielded FCC cable.

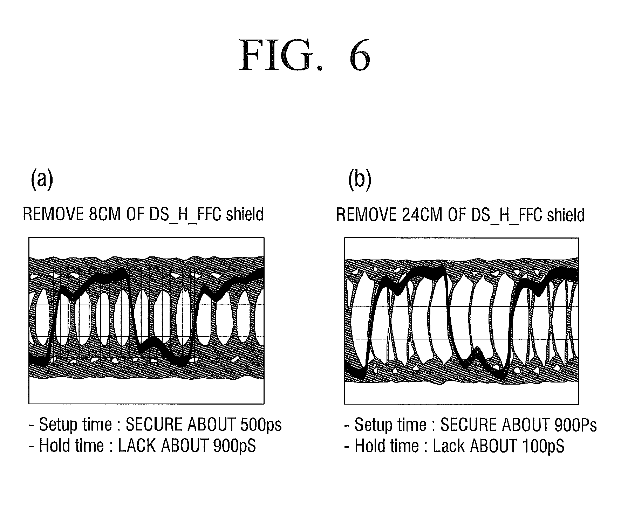

Referring to FIGS. 6A and 6B, hold times of a threshold level according to FFC shield conditions are illustrated. As shown, the reliability of a signal is lowered with a decrease in a hold margin of a signal according to a shield condition. Therefore, a conventional image scanning apparatus has a structure vulnerable to data scanning. As described above, if a conventional image scanning apparatus operates at a high speed, it is difficult to simultaneously control EMI radiated noise and a distortion of a signal.

However, in an image scanning apparatus and a circuit board in the image scanning apparatus according to the at least one exemplary embodiment of the present invention, an image sensor, an image processor, and a memory are disposed on one circuit board. Also, the image sensor, the image processor, and the memory are connected to one another using a PCB pattern, e.g., a signal trace 169. Therefore, a clock signal and a signal related to image scanning are stably provided to each of the image sensor, the image processor, and the memory.

Although various exemplary embodiments of the present invention have been illustrated and described, it will be appreciated by those skilled in the art that changes may be made in these exemplary embodiments without departing from the principles of the invention, the scope of which is defined in the appended claims.

## Claims

1. An image scanning apparatus, comprising:
an illuminator to radiate light on an original image;
an image sensor to scan image information of the original image from the light reflected from the original image;
an image processor to perform image processing with respect to a signal scanned by the image sensor; and
a memory to store data which is to be image-processed,
wherein the image sensor, the image processor, and the memory are disposed on one circuit board.

2. The image scanning apparatus as claimed in claim 1, wherein the image sensor, the image processor, and the memory are disposed on an upper surface of the circuit board.

3. The image scanning apparatus as claimed in claim 1, wherein the image sensor is disposed on an upper surface of the circuit board, and the image processor and the memory are disposed on a lower surface of the circuit board.

4. The image scanning apparatus as claimed in any one of claims 1 to 3, wherein the image sensor is at least one of a complementary metal-oxide semiconductor (CMOS) image sensor (CIS) and a charge-coupled device (CCD).

5. The image scanning apparatus as claimed in any one of claims 1 to 4, further comprising an analog front-end (AFE) circuit to convert the signal scanned by the image sensor into a digital signal and provide the digital signal to the image processor.

6. The image scanning apparatus as claimed in any one of claims 1 to 5, further comprising a communication interface unit to digitally output data processed by the image processor.

7. The image scanning apparatus as claimed in any one of claims 1 to 6, further comprising a light-emitting diode (LED) drive integrated circuit (IC) to control power supplied to the illuminator and to be disposed on the circuit board.

8. The image scanning apparatus as claimed in any one of claims 1 to 7, further comprising:
a motor to pass the original image through the image sensor; and
a motor drive IC to control power supplied to the motor,
wherein the motor drive IC is disposed on the circuit board.

9. A circuit board in an image scanning apparatus, comprising:
a sensor circuit to scan image information of an original image;
an image processor circuit to perform image processing with respect to a signal scanned by the sensor circuit; and
a memory circuit to store data which is to be image-processed,
wherein the image processor circuit and the memory circuit are fixed on a surface of the circuit board.

10. The circuit board as claimed in claim 9, wherein a part constituting the sensor circuit and a part constituting the image processor circuit and the memory circuit are disposed on different surfaces of the circuit board.

11. The circuit board as claimed in claim 9 or 10, wherein the sensor circuit comprises at least one of a CIS and a CCD.

12. The circuit board as claimed in any one of claims 9 to 11, further comprising an AFE circuit to convert the signal scanned by the sensor circuit and provide the digital signal to the image processor circuit.

13. The circuit board as claimed in any one of claims 9 to 12, wherein the sensor circuit and the AFE circuit are disposed on a surface of the circuit board.

14. The circuit board as claimed in any one of claims 9 to 13, further comprising a communication circuit to digitally output data processed by the image processor circuit.

15. The circuit board as claimed in any one of claims 9 to 14, further comprising:
an LED drive IC to control power supplied to an illuminator; and
a motor drive IC to control power supplied to a motor,
wherein the LED drive IC, the motor drive IC, the image processor circuit, and the memory circuit are fixed on a surface of the circuit board.
